(19) Europäisches Patentamt
European Patent Office
Office européen des brevets

(11) EP 2 998 352 B1

(12) EUROPEAN PATENT SPECIFICATION

(45) Date of publication and mention of the grant of the patent:
**05.12.2018 Bulletin 2018/49**

(21) Application number: **14826320.5**

(22) Date of filing: **13.06.2014**

(51) Int Cl.:
***C08L 23/28*** *(2006.01)* ***B60C 5/14*** *(2006.01)*
***C08K 3/04*** *(2006.01)* ***C08K 3/36*** *(2006.01)*
***C08L 21/00*** *(2006.01)* ***C08L 57/02*** *(2006.01)*
***C08L 61/04*** *(2006.01)* ***C08L 91/00*** *(2006.01)*

(86) International application number:
**PCT/JP2014/065761**

(87) International publication number:
**WO 2015/008565 (22.01.2015 Gazette 2015/03)**

(54) **TIRE**

REIFEN

PNEUMATIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **17.07.2013 JP 2013148559**
**15.11.2013 JP 2013236876**

(43) Date of publication of application:
**23.03.2016 Bulletin 2016/12**

(73) Proprietor: **Sumitomo Rubber Industries, Ltd.**
**Kobe-shi, Hyogo 651-0072 (JP)**

(72) Inventors:
- **MIYAZAKI, Tatsuya**
**Kobe-shi**
**Hyogo 651-0072 (JP)**
- **ISHINO, Soh**
**Kobe-shi**
**Hyogo 651-0072 (JP)**
- **YAMASHIRO, Yuhei**
**Kobe-shi**
**Hyogo 651-0072 (JP)**

(74) Representative: **Manitz Finsterwald Patentanwälte PartmbB**
**Martin-Greif-Strasse 1**
**80336 München (DE)**

(56) References cited:
**EP-A2- 0 723 883** **WO-A1-2007/111109**
**JP-A- S6 465 150** **JP-A- 2004 106 796**
**JP-A- 2005 113 027** **JP-A- 2005 272 717**
**JP-A- 2008 044 444** **JP-A- 2008 297 462**
**JP-A- 2009 161 592** **JP-A- 2011 126 929**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

### TECHNICAL FIELD

The present invention relates to a tire having an inner liner composed of a predetermined rubber composition.

### BACKGROUND ART

A butyl-based rubber has been used for a rubber composition constituting an inner liner of a tire (hereinafter also referred to as a rubber composition for an inner liner) (For example, Patent Document 1).

In the rubber composition for an inner liner, from the viewpoint of improvement of tackiness of an unvulcanized product at formation of a tire (i.e. building tackiness), the compounded amount of process oil is increased but in that case, there is a problem that air permeability of the obtained inner liner is insufficient and the like.

Durability (elongation at break) and rolling resistance are further required for a rubber composition for an inner liner.

### PRIOR ART DOCUMENT

#### Patent Document

Patent Document 1: JP 2005-113027 A

### SUMMARY OF THE INVENTION

#### PROBLEM TO BE SOLVED BY THE INVENTION

An object of the present invention is to provide a tire having an inner liner composed of a rubber composition for an inner liner which is excellent in building tackiness, air permeability and durability.

#### MEANS TO SOLVE THE PROBLEM

To solve the above problem, the present inventors have conducted extensive studies and found that a rubber composition comprising predetermined amounts of a mixed resin and a predetermined non-reactive alkylphenol resin in a predetermined rubber component can solve the above problem, and as a result of further studies, the present inventors have completed the present invention.

That is, the present invention relates to a tire having an inner liner composed of a rubber composition for an inner liner comprising 10 to 20 parts by mass of a mixed resin and 0.2 to 20 parts by mass of a non-reactive alkylphenol resin based on 100 parts by mass of a rubber component, wherein a content of a butyl rubber is 0 to 30% by mass and a total content of a butyl rubber and a halogenated butyl rubber is 70 to 100% by mass in 100% by mass of the rubber component, and a softening point of the non-reactive alkylphenol resin is 70 to 130°C.

It is preferable that the total content of a butyl rubber and a halogenated butyl rubber is 81 to 96% by mass, a compounded amount of the mixed resin is 10 to 20 parts by mass, and a compounded amount of the non-reactive alkylphenol resin is 0.2 to 10 parts by mass, the rubber composition for an inner liner may comprise a C5 petroleum resin and/or a coumarone indene resin, wherein among resin components composed of a mixed resin, a non-reactive alkylphenol resin, a C5 petroleum resin and a coumarone indene resin, a total content of resin components having a softening point of not less than 60°C is 9 to 20 parts by mass based on 100 parts by mass of the rubber component, the rubber composition for an inner liner further comprising 30 to 46 parts by mass in total of carbon black having a nitrogen adsorption specific surface area of 20 to 40 $m^2/g$ and/or silica having a nitrogen adsorption specific surface area of 20 to 120 $m^2/g$ as a reinforcing filler.

It is preferable that the total content of a butyl rubber and a halogenated butyl rubber is 85 to 90% by mass.

It is preferable that the rubber composition for an inner liner further comprises 0 to 40 parts by mass of a semi-reinforcing filler having an average particle size of not more than 250 $\mu$m and a total content of the reinforcing filler and the semi-reinforcing filler is 45 to 80 parts by mass.

It is preferable that a weight-average molecular weight of the non-reactive alkylphenol resin is 1,000 to 7,000.

It is preferable that the rubber composition for an inner liner further comprises 0.8 to 2.9 parts by mass of zinc oxide.

It is preferable that the rubber composition for an inner liner further comprises 0 to 7 parts by mass of later-added process oil.

It is preferable that a content of an aroma component in the later-added process oil is not more than 17% by mass.

EFFECT OF THE INVENTION

According to the present invention, it is possible to provide a tire having an inner liner composed of a rubber composition for an inner liner which is excellent in building tackiness, air permeability and durability, by compounding predetermined amounts of a mixed resin and a predetermined non-reactive alkylphenol resin in a predetermined rubber component.

Further, it is possible to provide a tire having an inner liner composed of a rubber composition for an inner liner which is also excellent in E* at low temperature in addition to building tackiness, air permeability and durability, and hardly cracks even in a cold area, by compounding predetermined amounts of a butyl rubber and a halogenated butyl rubber, a mixed resin, a non-reactive alkylphenol resin, a C5 petroleum resin, and a reinforcing filler.

EMBODIMENT FOR CARRYING OUT THE INVENTION

The rubber composition for an inner liner of the present invention comprises a predetermined amount of a predetermined rubber component, a mixed resin and a predetermined non-reactive alkylphenol resin, respectively.

<Rubber component>

The rubber component used in the present invention comprises a halogenated butyl rubber and if desired, also comprises a butyl rubber and other rubber components.

The butyl rubber used in the present invention refers to a non-halogenated butyl rubber or a reclaimed butyl rubber, which is known as a so called regular butyl rubber. Any of those typically used in the field can be suitably used as such butyl rubber.

The reclaimed butyl rubber is a pulverized matter of rubber products containing much amount of a butyl rubber such as a tube of a tire or a bladder used for tire production, or a matter obtained by desulfurizing the pulverized matter. In the reclaimed butyl rubber, the crosslinking bond in the rubber component is cut and enabled to be re-vulcanized. Generally, in a reclaimed butyl rubber, about 50% by mass thereof corresponds to a butyl rubber content. A sulfur content is also present in the reclaimed butyl rubber but is deactivated so as not to participate in crosslinking. In addition, a halogenated butyl rubber is partly included in the reclaimed butyl rubber but in that case, a halogen is deactivated so as not to influence the present invention.

Examples of a commercially available reclaimed butyl rubber include a tube reclaimed rubber manufactured by Muraoka Rubber Reclaiming Co., Ltd. and a bladder reclaimed rubber manufactured by CAR QUEST Co., Ltd.. The tube reclaimed rubber manufactured by Muraoka Rubber Reclaiming Co., Ltd. is a reclaimed rubber produced by conducting a heating process to a butyl tube under a pressure condition. The bladder reclaimed rubber manufactured by CAR QUEST Co., Ltd. is obtained by pulverizing a bladder with an extruder. These reclaimed butyl rubbers may be used alone, or may be used in combination with two or more thereof.

In the present invention, a halogenated butyl rubber is those obtained by introducing halogen(s) into a molecule of a regular butyl rubber. It is noted that the term "halogenated butyl rubber" as used herein does not include a halogenated butyl rubber contained in a reclaimed butyl rubber and indicates halogenated butyl rubbers other than that. Examples of the halogenated butyl rubber (X-IIR) as used in the present invention include a brominated butyl rubber (Br-IIR), a chlorinated butyl rubber (Cl-IIR). Among these, a chlorinated butyl rubber is preferable since it is excellent in a vulcanization speed and scorch resistance when using a natural rubber (NR) together therewith.

The content of a butyl rubber based on 100% by mass of the rubber component is not less than 0% by mass, preferably not less than 5% by mass, preferably not less than 8% by mass. On the other hand, the content is not more than 30% by mass, preferably not more than 25% by mass. If the content exceeds 30% by mass, there is a tendency that sufficient air permeability and elongation at break cannot be ensured.

The content of the halogenated butyl rubber based on 100% by mass of the rubber component is preferably not less than 40% by mass, more preferably not less than 45% by mass. If the content is less than 40% by mass, sufficient air permeability and vulcanization speed may not be ensured. There is no upper limit in the content of the halogenated butyl rubber and the content may be 100% by mass, while preferably, not more than 96% by mass, more preferably not more than 90% by mass. The content of not more than 96% by mass tends to further improve building tackiness and energy efficiency.

The total content of a butyl rubber and a halogenated butyl rubber based on 100% by mass of the rubber component is not less than 70% by mass, preferably not less than 75% by mass, more preferably not less than 80% by mass, further preferably not less than 81% by mass, most preferably not less than 85% by mass. If the total content is less than 70% by mass, there is a tendency that sufficient air permeability is not obtained. On the other hand, there is

no upper limit in the total content and the total content may be 100% by mass, while preferably, not more than 96% by mass, more preferably not more than 95% by mass, further preferably not more than 90% by mass. The total content of not more than 96% by mass tends to improve building tackiness and energy efficiency. In particular, from the viewpoint of a favorable balance of air permeability and E* at low temperature, the total content of a butyl rubber and a halogenated butyl rubber is preferably 81 to 96% by mass, more preferably 85 to 90% by mass.

In the rubber component of the present invention, examples of rubber components other than a butyl rubber and a halogenated butyl rubber which can be used (other rubber components) include a natural rubber (NR), an isoprene rubber (IR), a styrene butadiene rubber (SBR), a butadiene rubber (BR), an epoxidized natural rubber (ENR), a chloroprene rubber (CR), a styrene-isoprene-butadiene copolymer rubber (SIBR), a styrene-isobutylene-styrene block copolymer (SIBS). Among these, from the viewpoint of tackiness, NR and IR are preferable and NR is more preferable. From the viewpoint of air permeability, ENR and SIBS are preferable.

The NR is not limited particularly and examples thereof include those generally used in the tire industry such as SIR20, RSS#3, TSR20, UPNR.

The content of other rubber components based on 100% by mass of the rubber component is preferably not less than 4% by mass, more preferably not less than 5% by mass, more preferably not less than 10% by mass. If the content is less than 4% by mass, tackiness, sheet processability and energy efficiency tend to be deteriorated. On the other hand, the content of other rubber components is preferably not more than 30% by mass, more preferably not more than 25% by mass, further preferably not more than 20% by mass, further preferably not more than 19% by mass, most preferably not more than 15% by mass. If the content exceeds 30% by mass, the content of a butyl-based rubber becomes small and sufficient air permeability may not be ensured.

<Mixed resin>

In the present invention, a mixed resin refers to a mixture of two or more kinds of resins. Examples of a resin used in the mixed resin include an aromatic hydrocarbon-based resin such as a phenol adhesive resin, a coumarone resin, an indene resin, a coumarone indene resin, and an aliphatic hydrocarbon-based resin such as $C_5$, $C_8$, $C_9$, and among these, two or more kinds are selected and mixed to be used. Among these, a combination of an aromatic hydrocarbon-based resin and an aliphatic hydrocarbon-based resin is preferable and a combination of a high molecular aromatic hydrocarbon-based resin and an aliphatic hydrocarbon-based resin is more preferable.

Specific examples of the mixed resin include STRUKTOL 40MS manufactured by Struktol Company of America, Rhenosin 145A manufactured by Rhein Chemie Corp., Promix 400 manufactured by Flow Polymers Inc..

Since homogeneity of a rubber can be improved and air permeability can be improved, the compounded amount of the mixed resin is 10 to 20 parts by mass based on 100 parts by mass of the rubber component. On the other hand, the compounded amount is preferably not more than 18 parts by mass, more preferably not more than 16 parts by mass, further preferably not more than 15 parts by mass.

<Non-reactive alkylphenol resin>

In the present invention, a non-reactive alkylphenol resin refers to those having an alkyl chain in ortho-position and para-position (especially para-position) of a hydroxyl group of benzene ring in the chain and having less influence to a crosslinking reaction at vulcanization.

In the present invention, the non-reactive alkylphenol resin has a softening point in the range of 70 to 130°C. By using a resin having a softening point within this range, an advantage that air permeability and building tackiness are improved can be obtained. A resin having a softening point of higher than 130°C does not cause a burn of a butyl rubber in a normal Banbury kneading process and it becomes difficult to sufficiently disperse the resin. Therefore, a special procedure is required such as forming a master batch beforehand or making a compound temperature at the time of discharge from mixer high (for example, not lower than 170°C) and ensuring a kneading time under this high temperature for at least about one minute, and this tends to result in deteriorated workability. The softening point is preferably not lower than 80°C, more preferably not lower than 85°C, more preferably not lower than 100°C, further preferably not lower than 105°C. On the other hand, the softening point is preferably not higher than 129°C, more preferably not higher than 128°C, more preferably not higher than 127°C, more preferably not higher than 126°C, further preferably not higher than 125°C. The softening point as used herein is a temperature at which a resin begins to deform. In the present invention, the softening point is a value measured in accordance with a softening point measuring method described in JIS K5902, by use of an automatic softening point tester in accordance with a softening point tester described in JIS K2207, a softening point testing method.

It is preferable that the non-reactive alkylphenol resin of the present invention has a weight-average molecular weight (Mw) in the range of 1,000 to 7,000. If the Mw deviates from this range, air peameability and building tackiness tend to be deteriorated. The Mw is preferably not less than 1,500, more preferably not less than 2,000, further preferably

not less than 3,600. On the other hand, the Mw is preferably not more than 6,500, more preferably not more than 6,000. In the present invention, the Mw is a value measured with a gel permeation chromatography (GPC) (calibrated with polystyrene).

Specific examples of the non-reactive alkylphenol resin include TH110 manufactured by Struktol Company of America, SP1068 resin manufactured by Schenectady International, Inc..

One or more kinds of the non-reactive alkylphenol resin can be used in the present invention.

The compounded amount of the non-reactive alkylphenol resin is 0.2 to 20 parts by mass based on 100 parts by mass of the rubber component. The compounded amount is preferably not less than 0.5 part by mass, more preferably not less than 1 part by mass. On the other hand, the compounded amount is preferably not more than 19 parts by mass, more preferably not more than 18 parts by mass, more preferably not more than 17 parts by mass, more preferably not more than 16 parts by mass, further preferably not more than 15 parts by mass, further preferably not more than 10 parts by mass. If the compounded amount is within the above range, an E* at low temperature, energy efficiency and tackiness tend to be achieved at a high level. Particularly, in the case where a total content of a butyl rubber and a halogenated butyl rubber is not less than 81% by mass, the compounded amount is preferably not more than 10 parts by mass for preventing an elevation of E* at low temperature.

<C5 petroleum resin and a coumarone indene resin>

The rubber composition of the present invention can further comprise a C5 petroleum resin and/or a coumarone indene resin. The C5 petroleum resin in the present invention is a resin component which is compounded separately from an aliphatic hydrocarbon-based resin used for the mixed resin and specific examples thereof include MARUKAREZ T-100AS manufactured by Maruzen Petrochemical Co., Ltd.. Further, the coumarone indene resin is a resin comprising coumarone and indene, and specific examples thereof include Nitto Resin Coumarone G-90 (softening point: 90°C) manufactured by Nitto Chemical Co., Ltd., NOVERES C10 (softening point: 10°C) manufactured by Rutgers Chemicals. Though these resin components are generally inferior to the non-reactive alkylphenol in tackiness, they are excellent in energy efficiency.

When a C5 petroleum resin and/or a coumarone indene resin is compounded, the compounded amount thereof (if used in combination, the total compounded amount thereof) is preferably 0.2 to 20 parts by mass, more preferably 1.0 to 10 parts by mass based on 100 parts by mass of the rubber component since a favorable balance of E* at low temperature, energy efficiency and building tackiness can be obtained.

<Resin component>

Considering that the above mixed resin, non-reactive alkylphenol resin, C5 petroleum resin and coumarone indene resin are the resin components, among these, a total content of resin components having a softening point of not less than 60°C is preferably 9 to 20 parts by mass, more preferably 12 to 18 parts by mass based on 100 parts by mass of the rubber component since a favorable balance of E* at low temperature, energy efficiency and building tackiness can be obtained.

<Reinforcing filler>

The rubber composition of the present invention can comprise a reinforcing filler. Examples of the reinforcing filler include those comprising carbon black and/or silica. Carbon black is preferable as the reinforcing filler and silica may be used together with carbon black.

The nitrogen adsorption specific surface area ($N_2SA$) of the carbon black is not less than 20 $m^2/g$, preferably not less than 25 $m^2/g$. If the $N_2SA$ is less than 20 $m^2/g$, sufficient reinforcing property may not be obtained. On the other hand, the $N_2SA$ of the carbon black is not more than 40 $m^2/g$. If the $N_2SA$ exceeds 40 $m^2/g$, the rubber becomes too hard and there is a possibility that the E* at low temperature is elevated and crock growth resistance and elongation at break are deteriorated. It is noted that the nitrogen adsorption specific surface area of the carbon black is a value measured with the BET method in accordance with ASTM D3037-81.

Specific examples of the carbon black include Statex N762 ($N_2SA$: 29 $m^2/g$) manufactured by Columbian Chemicals, Statex N660 ($N_2SA$: 35 $m^2/g$) manufactured by Jiangxi Black Cat Carbon Black Co., Ltd., ShoBlack N660 ($N_2SA$: 35 $m^2/g$) manufactured by Cabot Japan K. K..

One or more kinds of carbon black can be used.

The nitrogen adsorption specific surface area ($N_2SA$) of the silica is not less than 20 $m^2/g$, preferably not less than 30 $m^2/g$. If the $N_2SA$ is less than 20 $m^2/g$, sufficient reinforcing property may not be obtained. On the other hand, the $N_2SA$ of the silica is not more than 120 $m^2/g$. If the $N_2SA$ exceeds 120 $m^2/g$, air permeability and tan$\delta$ may be deteriorated. It is noted that the $N_2SA$ of the silica is a value measured with the BET method in accordance with ASTM

D3037-81.

Specific examples of the silica include Z1085 ($N_2SA$: 80 $m^2/g$) manufactured by Rhodia Co., Ltd., Z115 ($N_2SA$: 115 $m^2/g$) manufactured by Rhodia Co., Ltd., Ultrasil U360 ($N_2SA$: 50 $m^2/g$) manufactured by Evonik Degussa GmbH.

One or more kinds of silica can be used.

<Semi-reinforcing filler>

The rubber composition of the present invention can comprise a semi-reinforcing filler and examples of such semi-reinforcing fillers include bituminous coal powder and/or a flat talc. Since these semi-reinforcing fillers do not form polymer gel during kneading, satisfactory sheet processability can be obtained. Bituminous coal powder (for example, Austin Black 325 manufactured by Coal Fillers Inc.) is preferable as a semi-reinforcing filler from the viewpoint of sheet processability and cost, and a flat talc having a large rate of the flat (for example, HAR manufactured by Nihon Mistron Co., Ltd.) is preferable as a semi-reinforcing filler from the viewpoint of air permeability.

The average particle diameter of the bituminous coal powder is preferably not more than 250 μm, more preferably not more than 50 μm, more preferably not more than 30 μm. If the average particle diameter excesses 250 μm, there is a tendency that durability, building tackiness and air permeability are deteriorated. The lower limit of the average particle diameter of the bituminous coal powder is not limited particularly, but preferably is not less than 1 μm.

The average particle diameter of the flat talc is preferably not more than 250 μm, more preferably not more than 50 μm, more preferably not more than 30 μm. If the average particle diameter excesses 250 μm, there is a tendency that durability, building tackiness and air permeability are deteriorated. The lower limit of the average particle diameter of the flat talc is not limited particularly, but preferably is not less than 1 μm since the production cost becomes inexpensive.

The flat talc as used herein refers to those having an aspect ratio of 3 to 100. If the aspect ratio deviates from the above range, crack growth resistance tends to be deteriorated. The aspect ratio is preferably not less than 5 and is preferably not more than 50 on the other hand.

One or more kinds of semi-reinforcing filler can be used and with respect to bituminous coal powder or flat talc, one or more kinds thereof can be used.

It is noted that the average particle diameter of the semi-reinforcing filler is an average particle diameter on a mass basis as calculated from a particle size distribution as measured in accordance with JIS Z 8815-1994. The aspect ratio of the above flat talc is a value calculated by dividing an average particle diameter by a thickness of a semi-reinforcing filler. The term "thickness of a semi-reinforcing filler" as used herein is a value determined by measuring a thickness of optional 20 semi-reinforcing fillers in a SEM (Scanning Electron Microscope) image, followed by arithmetic averaging.

<Compounded amount of fillers>

The total compounded amount of a reinforcing filler and a semi-reinforcing filler is 35 to 80 parts by mass based on 100 parts by mass of the rubber component since satisfactory reinforcing property can be obtained. The compounded amount is preferably not less than 40 parts by mass, more preferably not less than 45 parts by mass, more preferably not less than 50 parts by mass. On the other hand, the compounded amount is not more than 80 parts by mass, preferably not more than 79 parts by mass, more preferably not more than 78 parts by mass.

The compounded amount of the reinforcing filler is preferably not less than 20 parts by mass, more preferably not less than 25 parts by mass, further preferably not less than 30 parts by mass based on 100 parts by mass of the rubber component. On the other hand, the compounded amount is not more than 80 parts by mass, preferably not more than 79 parts by mass, more preferably not more than 78 parts by mass. Particularly, in the case where a total content of a butyl rubber and a halogenated butyl rubber is not less than 81% by mass, the compounded amount is preferably 30 to 46 parts by mass, more preferably 34 to 42 parts by mass for preventing an elevation of E* at low temperature.

Among reinforcing fillers, the compounded amount of the silica is preferably 0 to 30 parts by mass based on 100 parts by mass of the rubber component. When the rubber composition comprises silica, while elongation at break is improved, silica tends to become a cause of a rubber shrink after being extruded as a sheet.

In the case where the rubber composition comprises silica, the rubber composition can comprise 1 to 20 parts by mass of a silane coupling agent based on 100 parts by mass of the silica. The compounded amount is preferably not less than 2 parts by mass and is preferably not more than 15 parts by mass on the other hand. Those generally used in this field can be suitably used as a silane coupling agent and examples thereof include a sulfide silane coupling agent, a mercapto silane coupling agent, a vinyl silane coupling agent, an amino silane coupling agent, a glycidoxy silane coupling agent, a nitro silane coupling agent, a chloro silane coupling agent. Among these, a mercapto silane coupling agent is preferable. These silane coupling agents may be used alone, or may be used in combination with two or more thereof.

On the other hand, the compounded amount of the above semi-reinforcing agent is not less than 0 part by mass, preferably not less than 8 parts by mass, more preferably not less than 10 parts by mass based on 100 parts by

mass of the rubber component. On the other hand, the compounded amount of the above semi-reinforcing agent is not more than 40 parts by mass, preferably not more than 35 parts by mass. If the compounded amount exceeds 40 parts by mass, air permeability tends to be deteriorated.

<Zinc oxide>

It is preferable that the rubber composition of the present invention comprises a zinc oxide. A zinc oxide has an effect of promoting a crosslinking at an isoprene part in an isoprene rubber or a butyl-based rubber, thereby improves an E* and a tanδ can be decreased. The content of the zinc oxide is preferably not less than 0.8 part by mass, more preferably not less than 1.0 part by mass based on 100 parts by mass of the rubber component. If the content is less than 0.8 part by mass, there is a tendency that an effect of improving the E* and an effect of decreasing the tanδ cannot be obtained sufficiently. The content of the zinc oxide is preferably not more than 2.9 parts by mass, more preferably not more than 2.0 parts by mass, further preferably not more than 1.8 parts by mass. If the content exceeds 2.9 parts by mass, there is a tendency that an undispersed clot of the zinc oxide becomes a starting point of crack growth and crack growth resistance is deteriorated, or sheet processability is deteriorated. In addition, since there is air gap around the undispersed clot of the zinc oxide and air is leaked from the air gap, air permeability tends to be deteriorated. It is noted that since the zinc oxide promotes a crosslinking of a halogenated butyl rubber and becomes a cause of a rubber burn, the zinc oxide is added in a final kneading where a crosslinking system is added and is not added in a so called base kneading.

<Process oil>

In the present invention, in addition to the above compounded agents, process oil may be compounded. The compounded process oil as used herein is process oil which is compounded separately from an oil component contained in the reclaimed butyl rubber and the bituminous coal and referred to as later-added process oil. Ones generally used in this field can be suitably used as the process oil. In general, process oil is composed of a paraffin component, a naphthenic component and an aromatic component. Specific examples of the process oil include, in addition to Diana Process PA32 (paraffin component: 67% by mass, naphthenic component: 28% by mass, aromatic component: 5% by mass) manufactured by Idemitsu Kosan Co., Ltd., AC-12, AC-460, AH-24, AH-58, Vivatec40 (TDAE (Treated Distillate Aromatic Extracts) oil; paraffin component: 49% by mass, naphthenic component: 27% by mass, aromatic component: 23% by mass) manufactured by H&R Co., Ltd..

In the present invention, process oil having a less content of an aromatic component is preferable. If the content of the aromatic component is large, there is a tendency that compatibility with a butyl rubber is deteriorated, the process oil bleeds on the surface of a rubber sheet and building tackiness is deteriorated. In this case, the content of the aromatic component is preferably not more than 17% by mass, more preferably not more than 14% by mass, more preferably not more than 11% by mass.

One or more kinds of process oil can be used.

The compounded amount of the process oil is within the range of 0 to 7 parts by mass based on 100 parts by mass of the rubber component. The compounded amount is preferably 0 part by mass. On the other hand, the compounded amount is preferably not more than 5 parts by mass, more preferably not more than 3 parts by mass. If the compounded amount exceeds 7 parts by mass, there is a tendency that a mixed structure of polymer phases becomes rough and air permeability is deteriorated.

Among the rubber compositions for an inner liner of the present invention as explained above, particularly, the rubber composition comprising a rubber component of 4 to 20% by mass of a NR and 6 to 10 parts by mass of a mixed resin, 1 to 10 parts by mass of a non-reactive alkylphenol resin and 0 to 3 parts by mass of process oil is preferable in exerting the effect of the present invention.

<Stearic acid>

It is preferable that the rubber composition of the present invention comprises a stearic acid. The content of the stearic acid is preferably not less than 0.5 part by mass, more preferably not less than 0.8 part by mass based on 100 parts by mass of the rubber component. If the content is less than 0.5 part by mass, there is a tendency that a zinc oxide hardly disperses and sheet processability and elongation at break are deteriorated. The content of the stearic acid is preferably not more than 2.7 parts by mass, more preferably not more than 2.0 parts by mass, further preferably not more than 1.8 parts by mass. If the content exceeds 2.7 parts by mass, there is a tendency that slipping property at kneading becomes too high and dispersibility of a filler and elongation at break are deteriorated.

<Anti-aging agent>

It is preferable that the rubber composition of the present invention comprises an anti-aging agent. The anti-aging agent is not limited particularly and those used in the rubber field can be used, and examples thereof include a quinoline anti-aging agent, a quinone anti-aging agent, a phenol anti-aging agent, a phenylenediamine anti-aging agent. Among these, a quinoline anti-aging agent can be suitably used since it has an improved effect of preventing deterioration due to oxidation and hardly causes a rubber burn. Examples of the quinoline anti-aging agent include 2,2,4-trimethyl-1,2-dihydroquinoline polymer (RD), 6-ethoxy-2,2,4-trimethyl-1,2-dihydroquinoline and 2,2,4-trimethyl-1,2-dihydroquinoline polymer can be suitably used.

The compounded amount of the anti-aging agent is preferably not less than 0.5 part by mass, more preferably not less than 0.8 part by mass based on 100 parts by mass of the rubber component. If the compounded amount is less than 0.5 part by mass, there is a tendency that the effect of preventing deterioration due to oxidation in an inner liner or adjacent components cannot be improved efficiently. The compounded amount of the quinoline anti-aging agent is preferably not more than 2.0 parts by mass, more preferably not more than 1.5 parts by mass, further preferably not more than 1.2 parts by mass. If the compounded amount exceeds 2.0 parts by mass, there is a tendency that a rotor slip easily arises and dispersibility of a filler, elongation at break and kneading efficiency are deteriorated.

It is noted that in the case where the rubber composition comprises a phenylenediamine anti-aging agent such as N-(1,3-dimethylbutyl)-N'-phenyl-p-phenylenediamine (6PPD), N-isopropyl-N'-phenyl-p-phenylenediamine, a rubber burn may easily arise during kneading. Therefore, it is preferable that the rubber composition of the present invention comprises the phenylenediamine anti-aging agent as less as possible. From such viewpoint, the compounded amount of the phenylenediamine anti-aging agent is preferably not more than 0.5 part by mass, more preferably not more than 0.3 part by mass, further preferably 0 part by mass (substantially comprises no phenyldiamine anti-aging agent) based on 100 parts by mass of the rubber component.

<Crosslinking agent>

In addition to sulfur, an alkylphenol-sulfur chloride condensate can be suitably used as a crosslinking agent used in the present invention. Particularly, by using the rubber composition comprising an alkylphenol-sulfur chloride condensate, a more thermally stable crosslinking structure as compared to a normal sulfur crosslinking can be formed and which is preferable since this contributes to an improvement of energy efficiency and adhesive property in co-crosslinking to adjacent components mainly composed of a diene-based rubber such as a tie gum.

In the present invention, sulfur is not limited particularly and any of those general in the tire industry can be used.

An example of the alkylphenol-sulfur chloride condensate is a compound represented by a general formula (1)

[Chemical formula 1]

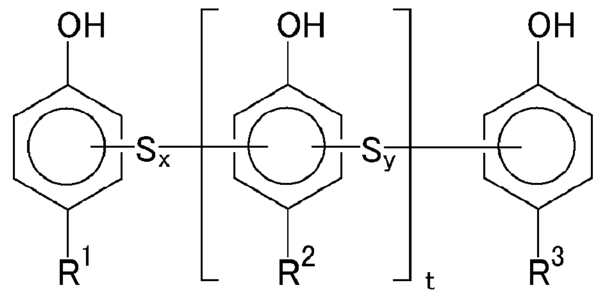

(1)

wherein $R^1$, $R^2$ and $R^3$ are the same as or different from each other and each representing a $C_{5-12}$ alkyl group; x and y are the same as or different from each other and each representing an integer of 1 to 3; and t represents an integer of 0 to 250.

In the above general formula (1), from the viewpoint of improvement of dispersibility of the alkylphenol-sulfur chloride condensate into the rubber component, it is preferable that t is an integer of 0 to 100, more preferably an integer of 10 to 100, particularly preferably an integer of 20 to 50. From the viewpoint of efficient achievement of high hardness, both x and y are preferably 2. From the viewpoint of improvement of dispersibility of the condensate into the rubber component, $R^1$ to $R^3$ are preferably a $C_{5-9}$ alkyl group.

The above alkylphenol-sulfur chloride condensate can be prepared by a known method and an example thereof is a method of reacting an alkylphenol and a sulfur chloride at a molar ratio of 1:0.9 to 1.25. Specific examples of the

above alkylphenol-sulfur chloride condensate include TACKIROL V200 (in the formula (1), $R^1$, $R^2$ and $R^3$: octyl group ($-C_8H_{17}$), x and y: 2, t: 0 to 100) and TS3101 (in the formula (1), $R^1$, $R^2$ and $R^3$: dodecyl group ($-C_{12}H_{25}$), x and y: 2, t: 150 to 200) manufactured by Taoka Chemical Co., Ltd..

In the case where the rubber composition of the present invention comprises the above alkylphenol-sulfur chloride condensate, the compounded amount thereof is preferably not less than 0.1 part by mass, more preferably not less than 0.3 part by mass based on 100 parts by mass of the rubber component. If the compounded amount is less than 0.1 part by mass, the effect of improving energy efficiency may not obtained sufficiently. On the other hand, the compounded amount of the above alkylphenol-sulfur chloride condensate is preferably not more than 3 parts by mass, more preferably not more than 1.5 parts by mass. If the compounded amount exceeds 3 parts by mass, a vulcanization speed becomes too fast and a rubber burn may easily arise.

In the present invention, from the viewpoint of formation of a satisfactory crosslinking structure, the compounded amount of the crosslinking agent is, in terms of sulfur, preferably not less than 0.3 part by mass, more preferably not less than 0.4 part by mass, and is preferably not more than 1.0 part by mass, more preferably not more than 0.8 part by mass based on 100 parts by mass of the rubber component.

The rubber composition of the present invention can suitably comprise, in addition to the above components, compounding agents generally used in the production of a rubber composition (for example, a low-temperature plasticizer, a vulcanization accelerator) as necessary.

The rubber composition comprising a low-temperature plasticizer can improve the E* at low temperature of the rubber composition. Examples of the low-temperature plasticizer include liquid components of dioctyl phthalate (DOP), dibutyl phthalate (DBP), tris(2-ethyl hexyl)phosphate (TOP), di(2-ethyl hexyl)sebacate (DOS).

While it is preferable that the rubber composition comprises no low-temperature plasticizer since building tackiness is deteriorated, in the case where the E* at low temperature needs to be improved, the compounded amount thereof is preferably not less than 1 part by mass, more preferably not less than 2 parts by mass, further preferably not less than 3 parts by mass based on 100 parts by mass of the rubber component. If the compounded amount is less than 1 part by mass, the effect of improving the E* at low temperature may not be obtained sufficiently. The compounded amount of the low-temperature plasticizer is preferably not more than 20 parts by mass, more preferably not more than 15 parts by mass, further preferably not more than 10 parts by mass. If the compounded amount exceeds 20 parts by mass, building tackiness and elongation at break may be deteriorated.

Examples of the vulcanization accelerator include a sulfenamide vulcanization accelerator, a thiazole vulcanization accelerator, a thiuram vulcanization accelerator, a thiourea vulcanization accelerator, a guanidine vulcanization accelerator, a dithiocarbamate vulcanization accelerator, an aldehyde-amine or aldehyde-ammonia vulcanization accelerator, an imidazoline vulcanization accelerator, a xanthate vulcanization accelerator. Among these, a thiazole vulcanization accelerator is preferable since it has a high melting point and a rubber burn hardly arises, and di-2-benzothiazyldisulfide is more preferable.

The compounded amount of the vulcanization accelerator is preferably not less than 0.2 part by mass, more preferably not less than 0.5 part by mass, further preferably not less than 0.8 part by mass based on 100 parts by mass of the rubber component. If the compounded amount is less than 0.2 part by mass, there is a tendency that a sufficient vulcanization speed and E* are not ensured. On the other hand, the compounded amount of the vulcanization accelerator is preferably not more than 5 parts by mass, more preferably not more than 3 parts by mass, further preferably not more than 2 parts by mass. If the compounded amount exceeds 5 parts by mass, the vulcanization speed may become too fast.

The rubber composition of the present invention can be produced by a general method. For example, the rubber composition can be produced by a method of kneading components other than the crosslinking agent, zinc oxide and vulcanization accelerator with a known kneader such as a Banbury mixer, a kneader, an open roll (i.e. base kneading), then adding the crosslinking agent, zinc oxide and vulcanization accelerator thereto and further kneading the mixture (i.e. final kneading), followed by vulcanization.

It is preferable that the rubber composition (vulcanized rubber composition) of the present invention has a tanδ measured at 70°C of not more than 0.26. If the tanδ exceeds 0.26, sufficient energy efficiency may not be ensured. The lower limit of the tanδ measured at 70°C is not limited particularly but in the case where the total amount of a reclaimed butyl rubber and a halogenated butyl rubber is not less than 70% by mass, the tanδ is typically not less than 0.10.

The pneumatic tire of the present invention can be used for tires for passenger vehicles, heavy duty tires, tires for industrial vehicles and among these, can be suitably used for tires for passenger vehicles.

The pneumatic tire of the present invention can be produced by a general method using the above rubber composition. That is, the rubber composition is extruded into the shape of an inner liner, formed in a tire building machine with a normal method and laminated with other components of the tire to obtain an unvulcanized tire. This unvulcanized tire is heated and pressurized in a vulcanizer to produce a tire.

EXAMPLE

Hereinafter, the present invention will be described in more detail based on Examples, but the present invention is not limited thereto only.

A variety of chemicals used in Examples and Comparative Examples will be explained.

(Variety of chemicals used)

Natural rubber (NR): TSR20 made in Malaysia
Isoprene rubber (IR): IR2200 manufactured by ZEON Corporation Halogenated butyl rubber 1: chlorobutyl rubber HT1066 manufactured by ExxonMobil Chemical
Halogenated butyl rubber 2: bromobutyl rubber 2255 manufactured by ExxonMobil Chemical
Reclaimed butyl rubber: reclaimed butyl rubber (butyl rubber: 50% by mass, carbon black N660: 33% by mass, other: 17% by mass) manufactured by CAR QUEST Co., Ltd.

Butyl rubber: regular butyl rubber 268 manufactured by ExxonMobil Chemical
Carbon black (CB) 1: Statex N762 ($N_2SA$: 29 $m^2/g$) manufactured by Columbian Chemicals
Carbon black (CB) 2: Statex N660 ($N_2SA$: 35 $m^2/g$) manufactured by Jiangxi Black Cat Carbon Black Co., Ltd.

Carbon black (CB) 3: ShoBlack N660 ($N_2SA$: 35 $m^2/g$) manufactured by Cabot Japan K. K.

Carbon black (CB) 4: ShoBlack N550 ($N_2SA$: 42 $m^2/g$) manufactured by Cabot Japan K. K.

Silica: Z1085 ($N_2SA$: 85 $m^2/g$) manufactured by Rhodia Co., Ltd.

Bituminous coal powder 1: Austin Black 325 (average particle diameter: 5 $\mu$m, specific gravity: 1.3, $N_2SA$ as determined by a BET method (BET specific surface area): 9.0 $m^2/g$, oil content: 17% by mass) manufactured by Coal Fillers Inc.

Bituminous coal powder 2: Austin Black 325 (average particle diameter: 20 $\mu$m, oil content: 17% by mass) manufactured by Coal Fillers Inc.

Bituminous coal powder 3: Austin Black 325 (average particle diameter: 80 $\mu$m, oil content: 17% by mass) manufactured by Coal Fillers Inc.

Bituminous coal powder 4: Austin Black 325 (average particle diameter: 200 $\mu$m, oil content: 17% by mass) manufactured by Coal Fillers Inc.

Talc (flat talc): HAR (average particle diameter: 5.7 $\mu$m, specific gravity: 2.7, BET specific surface area: 22 $m^2/g$) manufactured by Nihon Mistron Co., Ltd.

Mixed resin: 40MS (mixture of an aromatic hydrocarbon-based resin and an aliphatic hydrocarbon-based resin, softening point: 98 to 106°C) manufactured by Struktol Company of America
C5 petroleum resin: MARUKAREZ T-100AS (softening point: 97 to 103°C) manufactured by Maruzen Petrochemical Co., Ltd. Alkylphenol resin 1: SP1068 resin (softening point: 87°C, weight-average molecular weight (Mw): 2,225, number-average molecular weight (Mn): 1,053) manufactured by Schenectady International, Inc.

Alkylphenol resin 2: purified product of TH110 (softening point: 95°C) manufactured by Struktol Company of America
Alkylphenol resin 3: TH110 (softening point: 105°C, Mw: 4,342, Mn: 2,841) manufactured by Struktol Company of America
Alkylphenol resin 4: purified product of TH110 (softening point: 115°C) manufactured by Struktol Company of America
Alkylphenol resin 5: purified product of TH110 (softening point: 125°C) manufactured by Struktol Company of America
Alkylphenol resin 6: purified product of TH110 (softening point: 135°C) manufactured by Struktol Company of America
Process oil 1: Diana Process PA32 (paraffin component: 67% by mass, naphthenic component: 28% by mass, aromatic component: 5% by mass) manufactured by Idemitsu Kosan Co., Ltd.

Process oil 2: Vivatec40 (TDAE (Treated Distillate Aromatic Extracts) oil; paraffin component: 49% by mass, naphthenic component: 27% by mass, aromatic component: 23% by mass) manufactured by H&R Co., Ltd.

Low-temperature plasticizer DOS: di(2-ethyl hexyl)sebacate manufactured by DAIHACHI CHEMICAL INDUSTRY CO., LTD. Low-temperature plasticizer TOP: tris(2-ethyl hexyl)phosphate manufactured by DAIHACHI CHEMICAL INDUSTRY CO., LTD. Zinc oxide: zinc oxide #2 manufactured by Mitsui Mining & Smelting Co., Ltd.

Stearic acid: Stearic acid Tsubaki manufactured by NOF CORPORATION
Anti-aging agent RD: Nocrack 224 (2,2,4-trimethyl-1, 2-dihydroquinoline polymer) manufactured by Ouchi Shinko Chemical Industrial Co., Ltd.

5% Oil-containing sulfur powder: HK-200-5 (oil content: 5% by mass) manufactured by Hosoi Chemical Industry Co., Ltd. V200: TACKIROL V200 (alkylphenol-sulfur chloride condensate (sulfur content: 24% by mass, weight-average molecular weight: 9,000), in the general formula (1), $R^1$ to $R^3$ = $-C_8H_{17}$, x = 2, y = 2, t = integer of 0 to 100)
Vulcanization accelerator DM: Nocceler DM (di-2-benzothiazyldisulfide) manufactured by Ouchi Shinko Chemical Industrial Co., Ltd.

(Purified product of TH110)

TH110 (alkylphenol resin 3) was subjected to a gel permeation chromatography (GPC) and purified and aliquoted by use of a difference of an elution time to obtain an alkylphenol resin 2 and alkylphenol resins 4 to 6.

Examples and Comparative Examples

According to compounding formulations shown in Tables 1 to 5, all of the chemicals other than the zinc oxide, the crosskinking agent (sulfur, V200 (alkylphenol-sulfur chloride condensate)) and the vulcanization accelerator in the compounded materials were kneaded for five minutes with a 1.7L Banbury mixer at the compound temperature at the time of discharge from mixer of 160°C to obtain a rubber composition. Then, the zinc oxide, the crosskinking agent and the vulcanization accelerator were added to the obtained rubber composition and the mixture was kneaded for four minutes with a twin-screw open roll until the temperature became 105°C to obtain an unvulcanized rubber composition. The obtained unvulcanized rubber composition was extruded into a predetermined shape and press-vulcanized at 170°C for 12 minutes. It is noted that since the inner liner itself is a film shape and is difficult to be sampled, rubber test pieces were formed depending on purposes of respective test as shown below and evaluated.

(Viscoelasticity test)

A loss tangent (tanδ) of the vulcanized rubber compositions was measured under a condition of a temperature of 70°C, a frequency of 10 Hz, an initial strain of 10%, and a dynamic strain of 2% using a viscoelastic spectrometer VES (manufactured by Iwamoto Seisakusho K.K.). The smaller the tanδ is, the more excellent the energy efficiency is.

(E* at low temperature Test)

An elastic modulus (E*) of the vulcanized rubber compositions was measured under a condition of a temperature of -40°C, a frequency of 10 Hz, an initial strain of 10%, and a dynamic strain of 2% using a viscoelastic spectrometer VES (manufactured by Iwamoto Seisakusho K.K.). The smaller the E* is, the lower the hardness at low temperature environment (-40°C) is and the less possibility of a crack generation is. In the present invention, the E* at low temperature is preferably 3.3 to 150, more preferably 3 to 100.

(Tensile test)

According to JIS K6251 "vulcanized rubber and thermoplastic rubber - calculation of tensile characteristics", a tensile test was conducted at room temperature using a No.3 dumbbell type test piece comprising the above vulcanized rubber compositions, and an elongation at break EB (%) was measured. The larger the EB is, the more excellent the elongation at break (durability) is. In the present invention, the elongation at break is preferably not less than 560%, more preferably not less than 575%.

(Building tackiness test)

The above unvulcanized rubber compositions were extruded into a sheet shape having a thickness of 1 mm with a roll and using the obtained rubber sheets, tackiness between a metal flat plate sensor and a rubber plate was measured with a tack tester ("Tack Tester II" manufactured by Toyo Seiki Seisakusho Co. Ltd.). The results are shown by index, regarding the result of Comparative Example 1 as 100. The larger the index is, the more excellent the building tackiness is. In the present invention, building tackiness (index) is preferably not less than 100 and not more than 160.

The rubber composition for an inner liner in the sheet shape is, when winded around a tire forming drum prior to vulcanization, always overlapped for a width of several millimeters such that a joint portion of the sheets is not opened in a vulcanization process or the like. Further, when formed in the tire forming drum, the rubber composition for an inner liner also contacts a tie gum or a rubber composition for a case stop which are adjacent components. Therefore, building tackiness of such rubber composition for an inner liner is important from the viewpoint of securement of adhesive property in vulcanization at the overlapped portion and securement of adhesive property in vulcanization with the adjacent components. However, if building tackiness becomes excess, it may cause "shrink" in the unvulcanized state or "bear" after vulcanization (appearance defect due to undercure at an air pocket portion) and thus which is not preferable.

(Air permeability test)

An air permeation of the vulcanized rubber compositions was measured in accordance with an ASTM D-1434-75M method and the air permeation of each composition was shown by index by use of the following calculation formula. The larger the air barrier property index is, the smaller the air permeation of the vulcanized rubber composition is and the more excellent the air barrier property is. In the present invention, air permeability is preferably not less than 110.

$$(\text{Air barrier property index}) = (\text{Air permeation of Comparative Example 1}) / (\text{Air permeation of each composition}) \times 100$$

[Table 1]

| | EXAMPLE | | | | | | | | | | | | | | | | |
|---|---|---|---|---|---|---|---|---|---|---|---|---|---|---|---|---|---|
| | 1 | 2 | 3 | 4 | 5 | 6 | 7 | 8 | 9 | 10 | 11 | 12 | 13 | 14 | 15 | 16 | 17 |
| Compounding amount (part by mass) | | | | | | | | | | | | | | | | | |
| NR (TSR20) | 20 | 20 | 20 | 20 | 20 | 20 | 20 | 20 | 10 | 5 | 20 | 10 | 10 | 10 | 20 | 20 | 20 |
| IR (IR2200) | | | | | | | | | | | | | 10 | 10 | | | |
| Halogenated butyl rubber 1 (chloro HT1066) | 70 | 70 | 70 | 70 | 70 | 70 | 70 | 70 | 80 | 85 | 80 | 90 | 70 | 70 | 70 | 70 | 70 |
| Halogenated butyl rubber 2 (bromo 2255) | | | | | | | | | | | | | | | | | |
| Reclaimed butyl rubber (butyl rubber content) | 20 (10) | 20 (10) | 20 (10) | 20 (10) | 20 (10) | 20 (10) | 20 (10) | 20 (10) | 20 (10) | 20 (10) | | | 20 (10) | 20 (10) | 20 (10) | 20 (10) | 20 (10) |
| Butyl rubber (regular butyl 268) | | | | | | | | | | | | | | | | | |
| CB 1 (N762, BET specific surface area: 29) | | | | | | | | | | | | | 78 | 50 | | | |
| CB 2 (N660, BET specific surface area: 35) | 40 | 40 | 40 | 40 | 40 | 42 | 40 | 40 | 40 | 40 | 40 | 40 | | | 42 | 42 | 40 |
| Bituminous coal powder 1 (average particle diameter: 5 μm) | 20 | 20 | 20 | 20 | 20 | 20 | 20 | 20 | 20 | 20 | 20 | 20 | | 30 | 20 | 20 | 20 |
| Bituminous coal powder 2 (average particle diameter: 20 μm) | | | | | | | | | | | | | | | | | |

(continued)

| | EXAMPLE | | | | | | | | | | | | | | | | |
|---|---|---|---|---|---|---|---|---|---|---|---|---|---|---|---|---|---|
| | 1 | 2 | 3 | 4 | 5 | 6 | 7 | 8 | 9 | 10 | 11 | 12 | 13 | 14 | 15 | 16 | 17 |
| Compounding amount (part by mass) | | | | | | | | | | | | | | | | | |
| Bituminous coal powder 3 (average particle diameter: 80 μm) | | | | | | | | | | | | | | | | | |
| Bituminous coal powder 4 (average particle diameter: 200 μm) | | | | | | | | | | | | | | | | | |
| Flat talc (average: 5.7 μm) | | | | | | | | | | | | | | | | | |
| Mixed resin (softening point: 98 to 106°C) | 10 | 10 | 10 | 6 | 20 | 10 | 10 | 10 | 10 | 10 | 10 | 10 | 10 | 10 | 14 | 14 | 14 |
| C5 resin (softening point: 97 to 103°C) | | | | | | | | | | | | | | | | | |
| Alkylphenol resin 1 (softening point: 87°C) | | | | | | | | | | | | | | | | | |
| Alkylphenol resin 2 (softening point: 95°C) | | | | | | | | | | | | | | | | | |
| Alkylphenol resin 3 (softening point: 105 ° C) | 3 | | | 3 | 3 | 0.5 | 5 | 8 | 8 | 10 | 3 | 5 | 3 | 3 | 1 | 1 | 5 |

(continued)

| | EXAMPLE | | | | | | | | | | | | | | | | |
|---|---|---|---|---|---|---|---|---|---|---|---|---|---|---|---|---|---|
| | 1 | 2 | 3 | 4 | 5 | 6 | 7 | 8 | 9 | 10 | 11 | 12 | 13 | 14 | 15 | 16 | 17 |
| Compounding amount (part by mass) | | | | | | | | | | | | | | | | | |
| Alkylphenol resin 4 (softening point: 115°C) | | 3 | | | | | | | | | | | | | | | |
| Alkylphenol resin 5 (softening point: 125°C) | | | 3 | | | | | | | | | | | | | | |
| Alkylphenol resin 6 (softening point: 135°C) | | | | | | | | | | | | | | | | | |
| Process oil 1 (Diana Process PA32) | 1 | 1 | 1 | 1 | 1 | 3 | 1 | 1 | 1 | 4 | 3 | 3 | 2 | 2 | 7 | 2 | - |
| Process oil 2 (TDAE oil, Vivatec400) | | | | | | | | | | | | | | | | 5 | |
| Zinc oxide | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 |
| Stearic acid | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 |
| Anti-aging agent RD | 1 | 1 | 1 | 1 | 1 | 1 | 1 | 1 | 1 | 1 | 1 | 1 | 1 | 1 | 1 | 1 | 1 |
| 5% Oil-containing sulfur powder (a) | 0.45 | 0.45 | 0.45 | 0.45 | 0.45 | 0.45 | 0.45 | 0.45 | 0.45 | 0.45 | 0.45 | 0.45 | 0.45 | 0.45 | 0.45 | 0.45 | 0.45 |
| V200 (sulfur content: 24%) (b) | | | | | | | | | | | | | | | | | |

(continued)

| | EXAMPLE | | | | | | | | | | | | | | | | |
|---|---|---|---|---|---|---|---|---|---|---|---|---|---|---|---|---|---|
| | 1 | 2 | 3 | 4 | 5 | 6 | 7 | 8 | 9 | 10 | 11 | 12 | 13 | 14 | 15 | 16 | 17 |
| Compounding amount (part by mass) | | | | | | | | | | | | | | | | | |
| Total sulfur content of (a) and (b) | 0.428 | 0.428 | 0.428 | 0.428 | 0.428 | 0.428 | 0.428 | 0.428 | 0.428 | 0.428 | 0.428 | 0.428 | 0.428 | 0.428 | 0.428 | 0.428 | 0.428 |
| Vulcanization accelerator DM | 1.25 | 1.25 | 1.25 | 1.25 | 1.25 | 1.25 | 1.25 | 1.25 | 1.25 | 1.25 | 1.25 | 1.25 | 1.00 | 1.25 | 1.25 | 1.25 | 1.25 |
| Evaluation | | | | | | | | | | | | | | | | | |
| Rolling resistance (tanδ 70°C), target: ≤ 0.26 | 0.212 | 0.22 | 0.228 | 0.205 | 0.248 | 0.203 | 0.228 | 0.245 | 0.255 | 0.259 | 0.202 | 0.238 | 0.247 | 0.241 | 0.244 | 0.259 | 0.257 |
| E* at low temperature, target: 3.3 to 150 | 165 | 170 | 181 | 150 | 215 | 130 | 168 | 170 | 95 | 135 | 160 | 92 | 215 | 152 | 173 | 176 | 188 |
| Elongation at break % (EB%) target: ≥ 560 | 605 | 615 | 615 | 625 | 575 | 590 | 645 | 580 | 645 | 685 | 645 | 685 | 595 | 575 | 595 | 575 | 580 |
| Building tackiness, target: 100 to 160 | 115 | 105 | 100 | 115 | 105 | 100 | 130 | 135 | 105 | 100 | 115 | 120 | 115 | 115 | 115 | 115 | 120 |
| Air permeability, target: ≥ 110 | 120 | 117 | 117 | 110 | 141 | 114 | 121 | 121 | 165 | 175 | 124 | 160 | 127 | 122 | 120 | 121 | 128 |

[Table 2]

| | EXAMPLE | | | | | | | | | | | | | | | | |
|---|---|---|---|---|---|---|---|---|---|---|---|---|---|---|---|---|---|
| | 18 | 19 | 20 | 21 | 22 | 23 | 24 | 25 | 26 | 27 | 28 | 29 | 30 | 31 | 32 | 33 | 34 |
| Compounding amount (part by mass) | | | | | | | | | | | | | | | | | |
| NR (TSR20) | 20 | 20 | 10 | 20 | 20 | 20 | 20 | 10 | 5 | 10 | 10 | 10 | 20 | 20 | 15 | 20 | |
| IR (IR2200) | | | | | | | | | | | | | | | | | |
| Halogenated butyl rubber 1 (chloro HT1066) | 70 | 70 | 90 | 70 | 70 | 80 | 80 | 90 | 85 | 80 | 80 | 80 | 70 | | 75 | 60 | |
| Halogenated butyl rubber 2 (bromo 2255) | | | | | | | | | | | | | | 70 | | | 90 |
| Reclaimed butyl rubber (butyl rubber content) | 20 (10) | 20 (10) | | 20 (10) | 20 (10) | | | | 20 (10) | 20 (10) | 20 (10) | 20 (10) | | 20 (10) | 20 (10) | 20 (10) | 20 (10) |
| Butyl rubber (regular butyl 268) | | | | | | | | | | | | | 10 | | | 10 | |
| CB 1 (N762, BET specific surface area: 29) | | | | | | 45 | | | | | | | | | | | |
| CB 2 (N660, BET specific surface area: 35) | 40 | 40 | 40 | 40 | 40 | | 40 | 40 | 40 | 40 | 40 | 40 | 46 | 40 | 40 | 34 | 40 |
| Bituminous coal powder 1 (average particle diameter: 5 μm) | 20 | 20 | 20 | 0 | 0 | 35 | 20 | 20 | 0 | | | | 20 | 20 | 20 | 20 | 20 |
| Bituminous coal powder 2 (average particle diameter: 20 μm) | | | | | | | | | | 20 | | | | | | | |

(continued)

| | EXAMPLE | | | | | | | | | | | | | | | | |
|---|---|---|---|---|---|---|---|---|---|---|---|---|---|---|---|---|---|
| | 18 | 19 | 20 | 21 | 22 | 23 | 24 | 25 | 26 | 27 | 28 | 29 | 30 | 31 | 32 | 33 | 34 |
| Compounding amount (part by mass) | | | | | | | | | | | | | | | | | |
| Bituminous coal powder 3 (average particle diameter: 80 μm) | | | | | | | | | | | 20 | | | | | | |
| Bituminous coal powder 4 (average particle diameter: 200 μm) | | | | | | | | | | | | 20 | | | | | |
| Flat talc (average: 5.7 μm) | | | | 20 | | | | | 20 | | | | | | | | |
| Mixed resin (softening point: 98 to 106°C) | 10 | 10 | 10 | 10 | 10 | 10 | 10 | 10 | 10 | 10 | 10 | 10 | 14 | 10 | 7 | 10 | 10 |
| C5 resin (softening point: 97 to 103°C) | | | | | | | | | | | | | | | | | |
| Alkylphenol resin 1 (softening point: 87°C) | | | | | | | | | | | | | | | | | |
| Alkylphenol resin 2 (softening point: 95°C) | | | | | | | | | | | | | | | | | |
| Alkylphenol resin 3 (softening point: 105 ° C) | 3 | 3 | 5 | 3 | 3 | 3 | 3 | 5 | 10 | 10 | 8 | 8 | 5 | 3 | 2 | 3 | 10 |

(continued)

| | EXAMPLE | | | | | | | | | | | | | | | | |
|---|---|---|---|---|---|---|---|---|---|---|---|---|---|---|---|---|---|
| | 18 | 19 | 20 | 21 | 22 | 23 | 24 | 25 | 26 | 27 | 28 | 29 | 30 | 31 | 32 | 33 | 34 |
| Compounding amount (part by mass) | | | | | | | | | | | | | | | | | |
| Alkylphenol resin 4 (softening point: 115°C) | | | | | | | | | | | | | | | | | |
| Alkylphenol resin 5 (softening point: 125°C) | | | | | | | | | | | | | | | | | |
| Alkylphenol resin 6 (softening point: 135°C) | | | | | | | | | | | | | | | | | |
| Process oil 1 (Diana Process PA32) | 1 | 1 | | 1 | 1 | 1 | 3 | 3 | 1 | 1 | 1 | 1 | 2 | 1 | 1 | 1 | 1 |
| Process oil 2 (TDAE oil, Vivatec400) | | | 3 | | | | | | | | | | | | | | |
| Zinc oxide | 3.5 | 0.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 |
| Stearic acid | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 |
| Anti-aging agent RD | 1 | 1 | 1 | 1 | 1 | 0 | 1 | 1 | 1 | 1 | 1 | 1 | 1 | 1 | 1 | 1 | 1 |
| 5% Oil-containing sulfur powder (a) | 0.45 | 0.45 | 0.45 | 0.45 | 0.45 | 0.45 | 0.20 | 0.20 | 0.45 | 0.45 | 0.45 | 0.45 | 0.45 | 0.45 | 0.45 | 0.45 | 0.20 |
| V200 (sulfur content: 24%) (b) | | | | | | | 0.50 | 0.50 | | | | | | | | | 0.50 |
| Total sulfur content of (a) and (b) | 0.428 | 0.428 | 0.428 | 0.428 | 0.428 | 0.428 | 0.310 | 0.310 | 0.428 | 0.428 | 0.428 | 0.428 | 0.428 | 0.428 | 0.428 | 0.428 | 0.310 |

(continued)

| | EXAMPLE | | | | | | | | | | | | | | | | |
|---|---|---|---|---|---|---|---|---|---|---|---|---|---|---|---|---|---|
| | 18 | 19 | 20 | 21 | 22 | 23 | 24 | 25 | 26 | 27 | 28 | 29 | 30 | 31 | 32 | 33 | 34 |
| Compounding amount (part by mass) | | | | | | | | | | | | | | | | | |
| Vulcanization accelerator DM | 1.25 | 1.25 | 1.25 | 1.25 | 1.25 | 1.25 | 1.25 | 1.25 | 1.25 | 1.25 | 1.25 | 1.25 | 1.25 | 1.25 | 1.25 | 1.25 | 1.25 |
| Evaluation | | | | | | | | | | | | | | | | | |
| Rolling resistance (tanδ 70°C), target: ≤ 0.26 | 0.208 | 0.22 | 0.251 | 0.217 | 0.204 | 0.225 | 0.188 | 0.213 | 0.255 | 0.252 | 0.25 | 0.248 | 0.249 | 0.233 | 0.212 | 0.235 | 0.258 |
| E* at low temperature, target: 3.3 to 150 | 169 | 151 | 90 | 175 | 151 | 155 | 165 | 102 | 121 | 128 | 108 | 106 | 174 | 164 | 125 | 125 | 155 |
| Elongation at break % (EB%) target: ≥ 560 | 625 | 595 | 655 | 595 | 645 | 575 | 635 | 665 | 685 | 625 | 605 | 580 | 615 | 610 | 690 | 575 | 670 |
| Building tackiness, target: 100 to 160 | 117 | 106 | 100 | 118 | 110 | 105 | 115 | 120 | 105 | 125 | 125 | 125 | 120 | 115 | 110 | 102 | 105 |
| Air permeability, target: ≥ 110 | 113 | 122 | 160 | 132 | 118 | 122 | 120 | 161 | 192 | 164 | 162 | 160 | 120 | 122 | 132 | 110 | 190 |

[Table 3]

| | EXAMPLE | | COMPARATIVE EXAMPLE | | | | |
|---|---|---|---|---|---|---|---|
| | 35 | 36 | 1 | 2 | 3 | 4 | 5 |
| Compounding amount (part by mass) | | | | | | | |
| NR (TSR20) | 20 | 20 | 20 | 20 | 20 | 35 | 20 |
| IR (IR2200) | | | | | | | |
| Halogenated butyl rubber 1 (chloro HT1066) | 70 | 70 | 70 | 70 | 70 | 55 | 70 |
| Halogenated butyl rubber 2 (bromo 2255) | | | | | | | |
| Reclaimed butyl rubber (butyl rubber content) | 20 (10) | 20 (10) | 20 (10) | 20 (10) | 20 (10) | 20 (10) | 20 (10) |
| Butyl rubber (regular butyl 268) | | | | | | | |
| CB 1 (N762, BET specific surface area: 29) | | | | | | | |
| CB 2 (N660, BET specific surface area: 35) | 40 | 40 | 40 | 40 | 42 | 40 | 40 |
| Bituminous coal powder 1 (average particle diameter: 5 μm) | 20 | 20 | 20 | 20 | 20 | 20 | 20 |
| Bituminous coal powder 2 (average particle diameter: 20 μm) | | | | | | | |
| Bituminous coal powder 3 (average particle diameter: 80 μm) | | | | | | | |
| Bituminous coal powder 4 (average particle diameter: 200 μm) | | | | | | | |
| Flat talc (average: 5.7 μm) | | | | | | | |
| Mixed resin (softening point: 98 to 106°C) | 10 | 10 | 5 | 10 | 10 | 15 | 10 |
| C5 resin (softening point: 97 to 103°C) | | | 5 | 5 | | | |
| Alkylphenol resin 1 (softening point: 87°C) | 3 | | | | | | |
| Alkylphenol resin 2 (softening point: 95°C) | | 3 | | | | | |
| Alkylphenol resin 3 (softening point: 105°C) | | | | | | 3 | |
| Alkylphenol resin 4 (softening point: 115°C) | | | | | | | |
| Alkylphenol resin 5 (softening point: 125°C) | | | | | | | |
| Alkylphenol resin 6 (softening point: 135°C) | | | | | | | 3 |
| Process oil 1 (Diana Process PA32) | 1 | 1 | 3 | 1 | 8 | 1 | 1 |
| Process oil 2 (TDAE oil, Vivatec400) | | | | | | | |
| Zinc oxide | 1.5 | 1.5 | 1.5 | 1.5 | 1.5 | 1.5 | 1.5 |

(continued)

| | EXAMPLE | | COMPARATIVE EXAMPLE | | | | |
|---|---|---|---|---|---|---|---|
| | 35 | 36 | 1 | 2 | 3 | 4 | 5 |
| Compounding amount (part by mass) | | | | | | | |
| Stearic acid | 1.5 | 1.5 | 1.5 | 1.5 | 1.5 | 1.5 | 1.5 |
| Anti-aging agent RD | 1 | 1 | 1 | 1 | 1 | 1 | 1 |
| 5% Oil-containing sulfur powder (a) | 0.45 | 0.45 | 0.45 | 0.45 | 0.45 | 0.45 | 0.45 |
| V200 (sulfur content: 24%) (b) | | | | | | | |
| Total sulfur content of (a) and (b) | 0.428 | 0.428 | 0.428 | 0.428 | 0.428 | 0.428 | 0.428 |
| Vulcanization accelerator DM | 1.25 | 1.25 | 1.25 | 1.25 | 1.25 | 1.25 | 1.25 |
| Evaluation | | | | | | | |
| Rolling resistance (tanδ 70°C), target: ≤ 0.26 | 0.232 | 0.233 | 0.205 | 0.212 | 0.188 | 0.192 | 0.255 |
| E* at low temperature, target: 3.3 to 150 | 152 | 160 | 130 | 155 | 125 | 195 | 188 |
| Elongation at break % (EB%) target: ≥ 560 | 565 | 570 | 575 | 575 | 565 | 660 | 560 |
| Building tackiness, target: 100 to 160 | 105 | 108 | 105 | 165 | 110 | 110 | 90 |
| Air permeability, target: ≥ 110 | 120 | 120 | 100 | 107 | 102 | 92 | 109 |

[Table 4]

| | EXAMPLE | | | | | | | | | | | | | | | | | |
|---|---|---|---|---|---|---|---|---|---|---|---|---|---|---|---|---|---|---|
| | 37 | 38 | 39 | 40 | 41 | 42 | 43 | 44 | 45 | 46 | 47 | 48 | 49 | 50 | 51 | 52 | 53 | 54 |
| Compounding amount (part by mass) | | | | | | | | | | | | | | | | | | |
| NR (TSR20) | 15 | 10 | 4 | 15 | 15 | 15 | 15 | 15 | 15 | 15 | 15 | 15 | 15 | 4 | 4 | 15 | 15 | 15 |
| IR (IR2200) | | | | | | | | | | | | | | | | | | |
| Halogenated butyl rubber 1 (chloro HT1066) | 75 | 80 | 86 | 75 | 75 | 75 | 75 | 75 | 75 | 75 | 75 | 75 | 85 | 86 | 86 | 75 | 75 | 75 |
| Halogenated butyl rubber 2 (bromo 2255) | | | | | | | | | | | | | | | | | | |
| Reclaimed butyl rubber (butyl rubber content) | 20 (10) | 20 (10) | 20 (10) | 20 (10) | 20 (10) | 20 (10) | 20 (10) | 20 (10) | 20 (10) | 20 (10) | 20 (10) | 20 (10) | | 20 (10) | 20 (10) | 20 (10) | 20 (10) | 20 (10) |
| Butyl rubber (regular butyl 268) | | | | | | | | | | | | | | | | | | |
| CB 1 (N762, BET specific surface area: 29) | | | | | | 36 | | | | | | | | | | | | |
| CB 3 (N660, BET specific surface area: 35) | 40 | 40 | 40 | 45 | 30 | | 40 | 40 | 40 | 40 | 40 | 40 | 40 | 40 | 40 | 40 | 40 | 40 |
| CB 4 (N550, BET specific surface area: 42) | | | | | | | | | | | | | | | | | | |
| Silica | | | | | | 10 | | | | | | | | | | | | |

(continued)

| | EXAMPLE | | | | | | | | | | | | | | | | | |
|---|---|---|---|---|---|---|---|---|---|---|---|---|---|---|---|---|---|---|
| | 37 | 38 | 39 | 40 | 41 | 42 | 43 | 44 | 45 | 46 | 47 | 48 | 49 | 50 | 51 | 52 | 53 | 54 |
| Compounding amount (part by mass) | | | | | | | | | | | | | | | | | | |
| Bituminous coal powder 1 (average particle diameter: 5 μm) | 20 | 20 | 20 | 9 | 36 | 20 | 20 | 20 | 20 | 20 | 20 | 20 | 20 | 20 | 20 | 20 | | |
| Bituminous coal powder 3 (average particle diameter: 80 μm) | | | | | | | | | | | | | | | | | 20 | |
| Flat talc (average: 5.7 μm) | | | | | | | | | | | | | | | | | | 20 |
| Mixed resin (softening point: 98 to 106°C) | 10 | 10 | 10 | 10 | 10 | 10 | 17 | 7 | 10 | 10 | 10 | 10 | 10 | 10 | 10 | 10 | 10 | 10 |
| C5 resin (softening point: 97 to 103°C) | | 2.5 | 4.5 | | | | | | | | | | | 4.5 | 4.5 | | | |
| Alkylphenol resin 1 (softening point: 87°C) | 2.5 | 3.5 | 4.5 | 2.5 | 2.5 | 2.5 | 2.5 | 2.5 | 2.5 | 2.5 | 1.5 | 0.5 | 3.5 | 4.5 | 4.5 | | 2.5 | 2.5 |
| Alkylphenol resin 3 (softening point: 105°C) | | | | | | | | | | | | | | | | 2.5 | | |
| Process oil 1 (Diana Process PA32) | | | | 2 | | | | | | | 4 | 7 | | | | | | |

(continued)

| | EXAMPLE | | | | | | | | | | | | | | | | | |
|---|---|---|---|---|---|---|---|---|---|---|---|---|---|---|---|---|---|---|
| | 37 | 38 | 39 | 40 | 41 | 42 | 43 | 44 | 45 | 46 | 47 | 48 | 49 | 50 | 51 | 52 | 53 | 54 |
| Compounding amount (part by mass) | | | | | | | | | | | | | | | | | | |
| Process oil 2 (TDAE oil, Vivatec400) | | | | | | | | | | | | | | | | | | |
| Low-temperature plasticizer DOS | | | | | | | | | | | | | | 5 | | | | |
| Low-temperature plasticizer TOP | | | | | | | | | | | | | | | 5 | | | |
| Zinc oxide | 1.5 | 1.5 | 1.5 | 1.5 | 1.5 | 1.5 | 1.5 | 1.5 | 0.8 | 2.9 | 1.5 | 1.5 | 1.5 | 1.5 | 1.5 | 1.5 | 1.5 | 1.5 |
| Stearic acid | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 |
| Anti-aging agent RD | 1 | 1 | 1 | 1 | 1 | 1 | 1 | 1 | 1 | 1 | 1 | 1 | 1 | 1 | 1 | 1 | 1 | 1 |
| 5% Oil-containing sulfur powder (a) | 0.45 | 0.45 | 0.45 | 0.45 | 0.45 | 0.45 | 0.45 | 0.45 | 0.45 | 0.45 | 0.45 | 0.45 | 0.45 | 0.45 | 0.45 | 0.45 | 0.45 | 0.45 |
| V200 (sulfur content: 24%) (b) | | | | | | | | | | | | | | | | | | |
| Total sulfur content of (a) and (b) | 0.405 | 0.405 | 0.405 | 0.405 | 0.405 | 0.405 | 0.405 | 0.405 | 0.405 | 0.405 | 0.405 | 0.405 | 0.405 | 0.405 | 0.405 | 0.405 | 0.405 | 0.405 |
| Vulcanization accelerator DM | 1.25 | 1.25 | 1.25 | 1.25 | 1.25 | 1.25 | 1.25 | 1.25 | 1.25 | 1.25 | 1.25 | 1.25 | 1.25 | 1.25 | 1.25 | 1.25 | 1.25 | 1.25 |
| Evaluation | | | | | | | | | | | | | | | | | | |

(continued)

| | EXAMPLE | | | | | | | | | | | | | | | | | |
|---|---|---|---|---|---|---|---|---|---|---|---|---|---|---|---|---|---|---|
| | 37 | 38 | 39 | 40 | 41 | 42 | 43 | 44 | 45 | 46 | 47 | 48 | 49 | 50 | 51 | 52 | 53 | 54 |
| Compounding amount (part by mass) | | | | | | | | | | | | | | | | | | |
| E* at low temperature, target: 3.3 to 150 | 75 | 90 | 130 | 110 | 55 | 75 | 135 | 62 | 64 | 90 | 67 | 51 | 100 | 41 | 35 | 87 | 53 | 85 |
| Elongation at break % (EB%) target: ≥ 560 | 605 | 595 | 605 | 635 | 565 | 605 | 625 | 595 | 575 | 610 | 620 | 635 | 665 | 590 | 595 | 605 | 575 | 590 |
| Building tackiness, target: 100 to 160 | 110 | 100 | 100 | 110 | 115 | 105 | 100 | 100 | 100 | 115 | 110 | 110 | 105 | 100 | 100 | 115 | 110 | 110 |
| Air permeability, target: ≥ 110 | 150 | 165 | 180 | 155 | 120 | 160 | 165 | 135 | 150 | 145 | 132 | 124 | 170 | 193 | 195 | 152 | 145 | 165 |

[Table 5]

| | EXAMPLE | | | | | | | | COM. EX. | |
|---|---|---|---|---|---|---|---|---|---|---|
| | 55 | 56 | 57 | 58 | 59 | 60 | 61 | 62 | 6 | 7 |
| Compounding amount (part by mass) | | | | | | | | | | |
| NR (TSR20) | 15 | 15 | 15 | 15 | 3 | 15 | 15 | 15 | 20 | 15 |
| IR (IR2200) | | | | | | | | | | |
| Halogenated butyl rubber 1 (chloro HT1066) | 75 | 75 | 75 | 75 | 87 | 75 | 75 | 75 | 70 | 75 |
| Halogenated butyl rubber 2 (bromo 2255) | | | | | | | | | | |
| Reclaimed butyl rubber (butyl rubber content) | 20 (10) | 20 (10) | 20 (10) | 20 (10) | 20 (10) | 20 (10) | 20 (10) | 20 (10) | 20 (10) | 20 (10) |
| Butyl rubber (regular butyl 268) | | | | | | | | | | |
| CB 1 (N762, BET specific surface area: 29) | | | | | | | 60 | | | |
| CB 3 (N660, BET specific surface area: 35) | 50 | 50 | 50 | 25 | 40 | 40 | | | 40 | 40 |
| CB 4 (N550, BET specific surface area: 42) | | | | | | | | 34 | | |
| Silica | | | | 15 | | | | | | |
| Bituminous coal powder 1 (average particle diameter: 5 μm) | 20 | 20 | 20 | 20 | 20 | 20 | 20 | 20 | 20 | 20 |
| Bituminous coal powder 3 (average particle diameter: 80 μm) | | | | | | | | | | |
| Flat talc (average: 5.7 μm) | | | | | | | | | | |
| Mixed resin (softening point: 98 to 106°C) | 10 | 10 | 10 | 10 | 10 | 5 | 10 | 10 | 5 | 22 |
| C5 resin (softening point: 97 to 103°C) | | | | | | 2.5 | | | | |
| Alkylphenol resin 1 (softening point: 87°C) | 2.5 | 2.5 | 2.5 | 2.5 | 5 | 2.5 | 2.5 | 2.5 | | 2.5 |

(continued)

| | EXAMPLE | | | | | | | | COM. EX. | |
|---|---|---|---|---|---|---|---|---|---|---|
| | 55 | 56 | 57 | 58 | 59 | 60 | 61 | 62 | 6 | 7 |
| Compounding amount (part by mass) | | | | | | | | | | |
| Alkylphenol resin 3 (softening point: 105°C) | | | | | | | | | | |
| Process oil 1 (Diana Process PA32) | | | 7 | | 5 | | | | 7 | |
| Process oil 2 (TDAE oil, Vivatec400) | | | | | | | | | | |
| Low-temperature plasticizer DOS | | | | | | | | | | |
| Low- temperature plasticizer TOP | | | | | | | | | | |
| Zinc oxide | 1.5 | 1.5 | 1.5 | 1.5 | 1.5 | 1.5 | 1.5 | 1.5 | 1.5 | 1.5 |
| Stearic acid | 1.5 | 1.5 | 1.5 | 1.5 | 1.5 | 1.5 | 1.5 | 1.5 | 1.5 | 1.5 |
| Anti-aging agent RD | 1 | 1 | 1 | 1 | 1 | 1 | 1 | 1 | 1 | 1 |
| Compounding amount (part by mass) | | | | | | | | | | |
| 5% Oil-containing sulfur powder (a) | 0.35 | 0.45 | 0.45 | 0.45 | 0.45 | 0.45 | 0.45 | 0.45 | 0.45 | 0.45 |
| V200 (sulfur content: 24%) (b) | | | | | | | | | | |
| Total sulfur content of (a) and (b) | 0.315 | 0.405 | 0.405 | 0.405 | 0.405 | 0.405 | 0.405 | 0.405 | 0.405 | 0.405 |
| Vulcanization accelerator DM | 1.25 | 1.0 | 1.25 | 1.25 | 1.25 | 1.25 | 1.0 | 1.25 | 1.25 | 1.25 |
| Evaluation | | | | | | | | | | |
| E* at low temperature, target: 3.3 to 150 | 205 | 160 | 127 | 55 | 75 | 62 | 154 | 130 | 125 | 225 |
| Elongation at break % (EB%) target: ≥ 560 | 595 | 610 | 595 | 615 | 665 | 565 | 565 | 570 | 525 | 535 |
| Building tackiness, target: 100 to 160 | 105 | 105 | 120 | 110 | 100 | 110 | 100 | 100 | 100 | 110 |
| Air permeability, target: ≥ 110 | 155 | 155 | 127 | 135 | 170 | 113 | 158 | 112 | 100 | 170 |

According to the present invention, it is possible to provide a tire having an inner liner composed of a rubber composition for an inner liner which is excellent in building tackiness, air permeability and durability, by compounding predetermined amounts of a mixed resin and a predetermined non-reactive alkylphenol resin in a predetermined rubber component comprising a butyl rubber and a halogenated butyl rubber.

Further, it is possible to provide a tire having an inner liner composed of a rubber composition for an inner liner which is excellent in building tackiness, air permeability and durability under an extreme cold environment in addition to durability under a general environment, and hardly cracks under an environment of various temperatures, by compounding predetermined amounts of a butyl rubber and a halogenated butyl rubber, a mixed resin, a non-reactive alkylphenol resin, a C5 petroleum resin and/or a coumarone indene resin, and a reinforcing filler.

## Claims

1. A tire having an inner liner composed of a rubber composition for an inner liner comprising
10 to 20 parts by mass of a mixed resin and 0.2 to 20 parts by mass of a non-reactive alkylphenol resin based on 100 parts by mass of a rubber component,
wherein a content of a butyl rubber is 0 to 30% by mass and a total content of a butyl rubber and a halogenated butyl rubber is 70 to 100% by mass in 100% by mass of the rubber component, and
a softening point of the non-reactive alkylphenol resin is 70 to 130°C, wherein the softening point is a value measured in accordance with a softening point measuring method described in JIS K5902, by use of an automatic softening point tester in accordance with a softening point tester described in JIS K2207.

2. The tire having an inner liner composed of a rubber composition for an inner liner of claim 1,
wherein the total content of a butyl rubber and a halogenated butyl rubber is 81 to 96% by mass, and
a compounded amount of the non-reactive alkylphenol resin is 0.2 to 10 parts by mass, the rubber composition may comprise
a C5 petroleum resin and/or a coumarone indene resin,
wherein among resin components composed of a mixed resin, a non-reactive alkylphenol resin, a C5 petroleum resin and a coumarone indene resin, a total content of resin components having a softening point of not less than 60°C is 9 to 20 parts by mass based on 100 parts by mass of the rubber component, the rubber composition further comprising
30 to 46 parts by mass in total of carbon black having a nitrogen adsorption specific surface area of 20 to 40 $m^2/g$ and/or silica having a nitrogen adsorption specific surface area of 20 to 120 $m^2/g$ as a reinforcing filler.

3. The tire having an inner liner composed of a rubber composition for an inner liner of claim 1 or 2, wherein the total content of a butyl rubber and a halogenated butyl rubber is 85 to 90% by mass.

4. The tire having an inner liner composed of a rubber composition for an inner liner of claim 2 or 3, the rubber composition further comprises 0 to 40 parts by mass of a semi-reinforcing filler having an average particle size of not more than 250 μm and a total content of the reinforcing filler and the semi-reinforcing filler is 45 to 80 parts by mass.

5. The tire having an inner liner composed of a rubber composition for an inner liner of any of claims 1 to 4, wherein a weight-average molecular weight of the non-reactive alkylphenol resin is 1,000 to 7,000.

6. The tire having an inner liner composed of a rubber composition for an inner liner of any of claims 1 to 5, wherein the rubber composition further comprises 0.8 to 2.9 parts by mass of zinc oxide.

7. The tire having an inner liner composed of a rubber composition for an inner liner of any of claims 1 to 6, wherein the rubber composition further comprises 0 to 7 parts by mass of later-added process oil.

8. The tire having an inner liner composed of a rubber composition for an inner liner of claim 7, wherein a content of an aroma component in the later-added process oil is not more than 17% by mass.

## Patentansprüche

1. Reifen mit einem aus einer Kautschukzusammensetzung für einen Innerliner zusammengesetzten Innerliner, umfassend

10 bis 20 Masseteile eines gemischten Harzes und 0,2 bis 20 Masseteile eines nichtreaktiven Alkylphenolharzes bezogen auf 100 Masseteile einer Kautschukkomponente,
wobei ein Gehalt an einem Butylkautschuk 0 bis 30 Masse-% beträgt, und ein Gesamtgehalt an einem Butylkautschuk und einem halogenierten Butylkautschuk 70 bis Masse-% in 100 Masse-% der Kautschukkomponente beträgt, und ein Erweichungspunkt des nichtreaktiven Alkylphenolharzes 70 bis 130°C beträgt,
wobei der Erweichungspunkt ein Wert ist, der gemäß einem in JIS K5902 beschriebenen Erweichungspunkt-Messverfahren unter Verwendung einer automatischen Erweichungspunkt-Testvorrichtung gemäß einer in JIS K2207 beschriebenen Erweichungspunkt-Testvorrichtung gemessen wird.

2. Reifen mit einem aus einer Kautschukzusammensetzung für einen Innerliner zusammengesetzten Innerliner nach Anspruch 1,
wobei der Gesamtgehalt an einem Butylkautschuk und einem halogenierten Butylkautschuk 81 bis 96 Masse-% beträgt, und
eine kompoundierte Menge des nichtreaktiven Alkylphenolharzes 0,2 bis 10 Masseteile beträgt, wobei die Kautschukzusammensetzung ein C5-Erdölharz und/oder ein Cumaron-Inden-Harz umfassen kann,
wobei unter Harzkomponenten, die aus einem gemischten Harz, einem nichtreaktiven Alkylphenolharz, einem C5-Erdölharz und einem Cumaron-Inden-Harz zusammengesetzt sind, ein Gesamtgehalt an Harzkomponenten mit einem Erweichungspunkt von nicht weniger als 60°C 9 bis 10 Masseteile bezogen auf 100 Masseteile der Kautschukkomponente beträgt, wobei die Kautschukzusammensetzung ferner 30 bis 46 Gesamtmasseteile eines Rußes mit einer spezifischen Stickstoffadsorptionsoberfläche von 20 bis 40 $m^2/g$ und/oder Siliciumdioxid mit einer spezifischen Stickstoffadsorptionsoberfläche von 20 bis 120 $m^2/g$ als einen verstärkenden Füllstoff umfasst.

3. Reifen mit einem aus einer Kautschukzusammensetzung für einen Innerliner zusammengesetzten Innerliner nach Anspruch 1 oder 2, wobei der Gesamtgehalt an einem Butylkautschuk und einem halogenierten Butylkautschuk 85 bis 90 Masse-% beträgt.

4. Reifen mit einem aus einer Kautschukzusammensetzung für einen Innerliner zusammengesetzten Innerliner nach Anspruch 2 oder 3, wobei die Kautschukzusammensetzung ferner 0 bis 40 Masseteile eines halbverstärkenden Füllstoffes mit einer durchschnittlichen Partikelgröße von nicht mehr als 250 μm umfasst, und ein Gesamtgehalt des verstärkenden Füllstoffes und des halbverstärkenden Füllstoffes 45 bis 80 Massesteile beträgt.

5. Reifen mit einem aus einer Kautschukzusammensetzung für einen Innerliner zusammengesetzten Innerliner nach einem der Ansprüche 1 bis 4, wobei ein gewichtsgemitteltes Molekulargewicht des nichtreaktiven Alkylphenolharzes 1000 bis 7000 beträgt.

6. Reifen mit einem aus einer Kautschukzusammensetzung für einen Innerliner zusammengesetzten Innerliner nach einem der Ansprüche 1 bis 5, wobei die Kautschukzusammensetzung ferner 0,8 bis 2,9 Masseteile Zinkoxid umfasst.

7. Reifen mit einem aus einer Kautschukzusammensetzung für einen Innerliner zusammengesetzten Innerliner nach einem der Ansprüche 1 bis 6, wobei die Kautschukzusammensetzung ferner 0 bis 7 Masseteile eines später zugegebenen Prozessöles umfasst.

8. Reifen mit einem aus einer Kautschukzusammensetzung für einen Innerliner zusammengesetzten Innerliner nach Anspruch 7, wobei ein Gehalt an einer Aromatenkomponente in dem später zugegebenen Prozessöl nicht größer als 17 Masse-% ist.

## Revendications

1. Pneumatique ayant un doublage intérieur composé d'une composition au caoutchouc pour doublage intérieur, comprenant
10 à 20 parties en masse d'un mélange de résine et 0,2 à 20 parties en masse d'une résine alkyle phénol non réactive, basée sur 100 parties en masse d'un composant au caoutchouc,
dans lequel une teneur de caoutchouc butyle est de 0 à 30 % en masse et une teneur totale de caoutchouc butyle et de caoutchouc butyle halogéné est de 70 à 100 % en masse, dans 100 % en masse du composant au caoutchouc, et un point de ramollissement de la résine alkyle phénol non réactive est de 70 à 100° C, le point de ramollissement étant une valeur mesurée en accord avec un procédé de mesure de point de ramollissement décrit dans la norme JIS K5902, en utilisant un appareil de test de point de ramollissement automatique en accord avec un appareil de

test de point de ramollissement décrit dans la norme JIS K2207.

**2.** Pneumatique ayant un doublage intérieur composé d'une composition au caoutchouc pour doublage intérieur selon la revendication 1,
dans lequel la teneur totale de caoutchouc butyle et de caoutchouc butyle halogéné est de 81 à 96 % en masse, et une quantité composée de la résine alkyle phénol non réactive est de 0,2 à 10 parties en masse, la composition au caoutchouc pouvant comprendre une résine au pétrole en C5 et/ou une résine coumarone indène,
dans lequel parmi les composants résine constituant un mélange de résine, une résine alkyle phénol non réactive, une résine au pétrole en C5, et une résine coumarone indène, une teneur totale des composants en résine ayant un point de ramollissement qui n'est pas inférieur à 60° C est de 9 à 20 parties en masse sur la base de 100 parties en masse du composant au caoutchouc, la composition au caoutchouc comprenant en outre 30 à 46 parties en masse au total de noir de carbone ayant une superficie d'adsorption d'azote spécifique de 20 à 40 $m^2/g$ et/ou de la silice ayant une superficie d'adsorption d'azote spécifique de 20 à 120 $m^2/g$ à titre de charge de renforcement.

**3.** Pneumatique ayant un doublage intérieur composé d'une composition au caoutchouc pour doublage intérieur selon la revendication 1 ou 2, dans lequel la teneur totale de caoutchouc au butyle et de caoutchouc au butyle halogéné est de 85 à 90 % en masse.

**4.** Pneumatique ayant un doublage intérieur composé d'une composition au caoutchouc pour doublage intérieur selon la revendication 2 ou 3, la composition au caoutchouc comprenant en outre 0 à 40 parties en masse d'une charge de semi-renforcement ayant une taille de particules moyenne qui ne dépasse pas 250 μm et une teneur totale de la charge de renforcement et de la charge de semi-renforcement est de 45 à 80 parties en masse.

**5.** Pneumatique ayant un doublage intérieur composé d'une composition au caoutchouc pour doublage intérieur selon l'une quelconque des revendications 1 à 4, dans lequel un poids moléculaire moyen de la résine alkyle phénol non réactive est de 1000 à 7000.

**6.** Pneumatique ayant un doublage intérieur composé d'une composition au caoutchouc pour doublage intérieur selon l'une quelconque des revendications 1 à 5, dans lequel la composition au caoutchouc comprend en outre de 0,8 à 2,9 parties en masse d'oxyde de zinc.

**7.** Pneumatique ayant un doublage intérieur composé d'une composition au caoutchouc pour doublage intérieur selon l'une quelconque des revendications 1 à 6, dans lequel la composition au caoutchouc comprend en outre de 0 à 7 parties en masse d'huile de traitement ajoutée en dernier.

**8.** Pneumatique ayant un doublage intérieur composé d'une composition au caoutchouc pour doublage intérieur selon la revendication 7, dans lequel une teneur d'un composant aromatique dans l'huile de traitement ajoutée en dernier n'est pas plus de 17 % en masse.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2005113027 A